# EUROPEAN PATENT APPLICATION

(11) **EP 3 291 379 A1**
(43) Date of publication of application: **07.03.2018**
(21) Application number: 17186899.5
(22) Date of filing: 18.08.2017
(51) Int. Cl.: H01R 13/52, H01R 13/533, H02G 15/064, H02G 15/068

(54) **CABLE CONNECTION DEVICE AND POWER CABLE**

(30) Priority: 30.08.2016 JP 2016167822
(71) Applicant: Hitachi Metals, Ltd., Minato-ku, Tokyo 108-8224 (JP)
(72) Inventor: SUMI, Yosuke, Minato-ku, Tokyo (JP); OTAWA, Kenichi, Minato-ku, Tokyo (JP); NOUJIYOU, Hitoshi, Minato-ku, Tokyo (JP)
(74) Representative: Gill, David Alan

(57) **Abstract**

The present invention provides for a cable connection device (1) including a female rubber unit (4) including an inner contact surface (4a) inside the female rubber unit (4), a male rubber unit (5) including an outer contact surface (5a) outside the male rubber unit (5), and an epoxy unit (6) that is arranged between the female rubber unit (4) and the male rubber unit (5), and that includes an insulator (60) including a female contact surface (6a) to contact the inner contact surface (4a) and a male contact surface (6b) to contact the outer contact surface (5a), and defines a through hole (6c) formed in an axial direction at a center of the epoxy unit (6) around the connector (3), and wherein an insulator (40) of the female rubber unit (4) and/or an insulator (50) of the male rubber unit (5) is integrated with insulating layers (21 A, 21B) of power cables (2A, 2B).

## Description

The present invention relates to a cable connection device and a power cable.

A cable connection device for connecting a pair of power cables is known by which a leading power cable led on a roof of a vehicle is connected with a crossover power cable connecting between vehicles (see e.g. JP-H08-310394).

However, known connection devices exhibit various disadvantages and limitation particularly with regard to their size. For example, it is noted that it would be advantageous for the cable connection device to connect the leading power cable and the crossover power cable disclosed in JP-H08-310394 is desired to be downsized.

The invention seeks to provide for a cable connection device and power cable having advantages over known such devices and cables, in particular with regard to size.

In particular, the invention seeks to provide a cable connection device that can be downsized, as well as a power cable using such a cable connection device.

According to one aspect of the invention, there is provided a cable connection device comprising a plurality of insulating parts arranged around a connection of cable conductors that are exposed from terminations of a pair of power cables as a connected object,
wherein the plurality of insulating parts comprise a female part comprising an inner contact surface inside the female part, a male part comprising an outer contact surface outside the male part, and an intermediate part that is arranged between the female part and the male part and that comprises an insulator comprising an insulating material, a female contact surface to contact the inner contact surface and a male contact surface to contact the outer contact surface, the intermediate part defining a through hole formed in an axial direction at a center of the intermediate part, and
wherein an insulator of the female part and/or the male part is integrated with an insulating layer of the power cables.
Preferably, the connection can comprise a female conductor connection terminal which is arranged in the through hole and on which one of the cable conductors that is exposed is mounted, and a male conductor connection terminal which is arranged in the through hole and is inserted into the female conductor connection terminal and on which an other of the cable conductors that is exposed is mounted.

Also, the male part can be integrated with the intermediate part.

Further, the intermediate part can comprise a conductive tube that defines the through hole and is arranged inside the insulator.

Advantageously, the female part and the male part mainly comprise a rubber, and wherein the insulator of the intermediate part is formed by an insulating material harder than the rubber.

As a further advantage, the intermediate part can be constructed such that an area of the male contact surface is smaller than an area of the female contact surface, and that a gap can be defined inside the through hole and between the intermediate part and the connection so as to have a flow path to allow air escape through an interface between the female contact surface and the inner contact surface when the female contact surface contacts the inner contact surface of the female part.

According to another aspect of the invention, there is provided a power cable, comprising an insulating layer integrated with an insulator of the male part and/or the female part of the cable connection device as outlined above.
According to an aspect of the invention, a cable connection device can be provided that can be downsized, as well as a power cable using the cable connection device.

The invention is described further hereinafter, by way of example only, with reference to the accompanying drawings in which:
FIG.1 is a cross sectional view schematically showing a structural example of a cable connection device according to an embodiment in the present invention;
FIG.2 is an exploded perspective view showing a main part of the cable connection device shown in FIG.1;
FIG.3 is a exploded perspective view showing a main part of the cable connection device integrated with power cable shown in FIG.1; and
FIG.4 is a cross sectional view showing a main part of the cable connection device to explain an assembly process shown in FIG.1.

Next, an embodiment of the present invention will be described below with reference to the appended drawings. Meanwhile, the same reference numerals are assigned to the elements having substantially the same functions as the elements in the figures and the redundant description thereof is omitted.

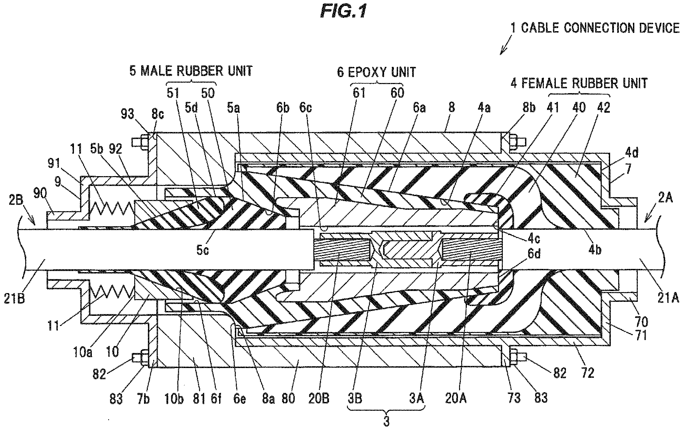

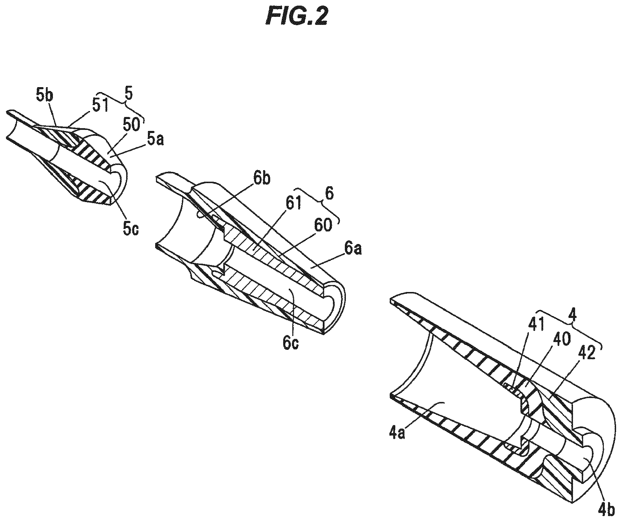

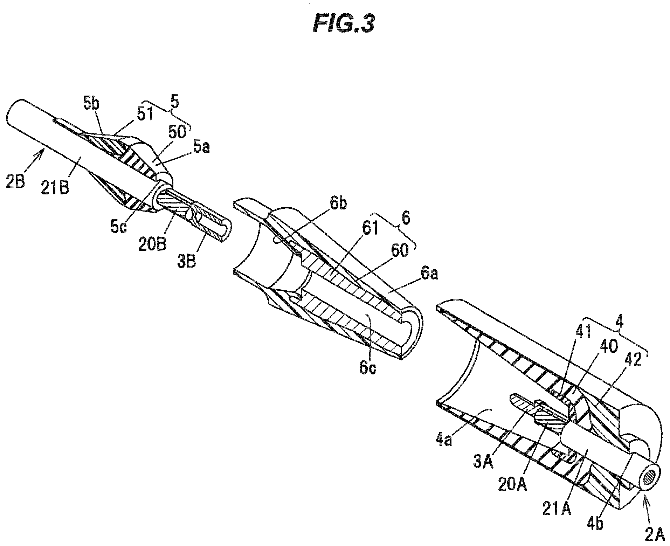

FIG.1 is a cross sectional view schematically showing a structural example of a cable connection device according to the embodiment in the present invention. FIG.2 is an exploded perspective view showing a main part of the cable connection device shown in FIG.1. FIG.3 is a exploded perspective view showing a main part of the cable connection device integrated with power cable shown in FIG. 1.

A cable connection device 1 comprises a connection 3 formed by one pair of conductor connection terminals 3A, 3B that are respectively connected to cable conductors 20A, 20B exposed by stepwise peeling terminations of one pair of power cables 2A, 2B that are connection objects. The cable connection device 1 comprises three insulating parts that are a female rubber unit 4, a male rubber unit 5, and an epoxy unit 6 that are arranged around the connection 3 so as to electrically insulate a circumference of the connection 3.

Such insulating parts are preferable to be assembled in predetermined assembly sequence so as to easily connect one pair of the power cables 2A, 2B and remove air from a contact surface (an interface) between both insulating parts. It is preferable to arrange an air escape flow path between the connection 3 and the epoxy unit 6 for the above purpose. In this case, the female rubber unit 4 is an example of a female part. The male rubber unit 5 is an example of a male part. The epoxy unit 6 is an example of an intermediate part.

The cable connection device 1 comprises a first body 7, an intermediate body 8, and a second body 9 that house the female rubber unit 4, the male rubber unit 5, and the epoxy unit 6 while one pair of the power cables 2A, 2B are connected by one pair of the conductor connection terminals 3A, 3B, and a spring member 11 pressing the male rubber unit 5 toward the female rubber unit 4 through a pressing member 10.

For example, the power cables 2A, 2B comprise the cable conductors 20A, 20B made of strands. And the power cables 2A, 2B are formed by an inner semi-conductor layer, insulating layers 21 A, 21B, an outer semi-conductor layer, a shielding layer, a pressing tape layer, and a sheath layer on outer peripheries of the cable conductors 20A, 20B in this order. The power cables 2A, 2B are high voltage cables. For example, the power cables 2A, 2B are extra-high voltage cables used for train.
The connection 3 comprises a female conductor connection terminal 3B on which one of the exposed cable conductors (the cable conductor 20B) is mounted, a male conductor connection terminal 3A inserted into the female conductor connection terminal 3B on which the other exposed cable conductor (the cable conductor 20A) is mounted that are arranged in a through hole 6c of the epoxy unit 6 that will be described below. For example, the male conductor connection terminal 3A and the female conductor connection terminal 3B are formed by metals such as brass and aluminum alloy.
The female rubber unit 4 is arranged at outer edge sides of parts such as the power cable 2A and the connection 3. The female rubber unit 4 is mainly formed by rubber. The female rubber unit 4 comprises a conical inner contact surface 4a inside the female rubber unit 4, and defines a through hole 4b along the axial direction at the center of the female rubber unit 4. Specifically, the female rubber unit 4 comprises an insulator 40 formed by a rubber mold and semi-conductor layers 41, 42 made of conductive rubber that are arranged at both sides in the axial direction of the insulator 40. The through hole 4b is preferable to define a diameter smaller than an outer diameter of the power cable 2A (an outer diameter of the insulating layer 21 A shown in FIG.1) so as not to cause void (pore) at an interface with the power cable 2A. The female rubber unit 4 comprises a bottom surface 4c on which an end surface 6d of the epoxy unit 6 abuts. The female rubber unit 4 comprises an end surface 4d that abuts on an inner surface of a vertical wall 71 of the first body 7.

For example, the insulator 40 is formed by rubber such as silicone rubber, ethylene propylene monomer (EPM) rubber, and ethylene propylene diene monomer (EPDM) rubber. The insulator 40 is integrated with the insulating layer 21 A of the power cable 2A. Although a method of integrating is preferable to be integrally molded, it is not limited to. The method of integrating may be fusing or adhesion by an adhesive agent.

The semi-conductor layers 41, 42 are arranged so as to decrease electric field concentration. The semi-conductor layers 41, 42 are mainly formed by polymer type material. For example, the semi-conductor layers 41, 42 are formed by extrusion molding rubber such as ethylene propylene monomer rubber, ethylene-vinyl acetate (EVA) copolymer resin, and butyl rubber that have conductivity by dispersing conductive powders such as carbon.

The male rubber unit 5 is arranged at an outer edge side of the power cable 2B. The male rubber unit 5 is mainly formed by rubber. The male rubber unit 5 comprises a conical outer contact surface 5a at a conductor connection terminal 3B side and a conical outer contact surface 5b at an opposite side of the conductor connection terminal 3B, and defines a through hole 5c along the axial direction at the center of the male rubber unit 5. Specifically, the male rubber unit 5 comprises an insulator 50 arranged at the conductor connection terminal 3B side and a semi-conductor layer 51 made of conductive rubber that is arranged at the opposite side of the conductor connection terminal 3B. The through hole 5c is preferable to define a diameter smaller than an outer diameter of the power cable 2B (an outer diameter of the insulating layer 21B shown in FIG.1) so as not to cause the void (the pore) at an interface with the power cable 2B. Further, the male rubber unit 5 is preferable to have the outer diameter of a periphery 5d that is a maximum diameter of the male rubber unit 5 smaller than an inner diameter of an inner peripheral surface 6f of the epoxy unit 6 that will be described below.

For example, the insulator 50 is formed by rubber such as the silicone rubber, the ethylene propylene monomer (EPM) rubber, and the ethylene propylene diene monomer (EPDM) rubber. The insulator 50 is integrated with the insulating layer 21B of the power cable 2B. Although a method of integrating is preferable to be integrally molded, it is not limited to. The method of integrating may be fusing or adhesion by the adhesive agent.

The semi-conductor layer 51 is arranged so as to decrease the electric field concentration. The semi-conductor layer 51 is mainly formed by the polymer type material. For example, the semi-conductor layer 51 is formed by extrusion molding rubber such as the ethylene propylene monomer rubber, the ethylene-vinyl acetate (EVA) copolymer resin, and the butyl rubber that have conductivity by dispersing the conductive powders such as carbon.
The epoxy unit 6 is arranged at outer edge sides of one pair of the conductor connection terminals 3A, 3B, and between the female rubber unit 4 and the male rubber unit 5. The epoxy unit 6 comprises a female contact surface 6a contacting the inner contact surface 4a of the female rubber unit 4 and a male contact surface 6b contacting the outer contact surface 5a of the male rubber unit 5. The epoxy unit 6 comprises an insulator 60 formed by insulating materials harder than the rubber forming the female rubber unit 4 and the male rubber unit 5 such as epoxy resin, and a conductive tube 61 that defines the through hole 6c along the axial direction at the center of the epoxy unit 6 and that is arranged inside the insulator 60. Further, the epoxy unit 6 comprises the end surface 6d abutting on the bottom surface 4c of the female rubber unit 4, and an end surface 6e abutting on an end surface 8a of a thick cylinder 81 of the intermediate body 8 that will be described below. For example, the conductive tube 61 is made of metals such as brass and aluminum alloy.

An contact area between the outer contact surface 5a of the male rubber unit 5 and the male contact surface 6b of the epoxy unit 6 is set smaller than an contact area between the inner contact surface 4a of the female rubber unit 4 and the female contact surface 6a of the epoxy unit 6. And an inclined angle of the male contact surface 6b with respect to the central axis is set larger than an inclined angle of the female contact surface 6a with respect to the central axis.

A gap formed between the through hole 6c of the conductive tube 61, and the connection 3 and the power cable 2B is the air escape flow path from an interface between the female contact surface 6a of the epoxy unit 6 and the inner contact surface 4a of the female rubber unit 4 when the female contact surface 6a of the epoxy unit 6 contacts the inner contact surface 4a of the female rubber unit 4 while the outer contact surface 5a of the male rubber unit 5 fails to contact the male contact surface 6b of the epoxy unit 6.

The male rubber unit 5 may be integrated with the epoxy unit 6 after the process to contact the female contact surface 6a of the epoxy unit 6 with the inner contact surface 4a of the female rubber unit 4. The male rubber unit 5 may be integrated with the epoxy unit 6 originally if the above air escape flow path (the gap) is not arranged. Methods of integrating include adhesion and fusing.
The first body 7 comprises a small diameter tube 70, the vertical wall 71 formed outward from one end of the small diameter tube 70, a large diameter tube 72 connected to an outside end of the vertical wall 71, and a flange 73 formed at an outside of the large diameter tube 72. A plurality of mounting holes is formed on the flange 73 at regular intervals.

The intermediate body 8 comprises a thin cylinder 80 and the thick cylinder 81. A plurality of bolts 82 is provided in a protruding condition on an end surface 8b of the thin cylinder 80 at positions with respect to a plurality of mounting holes formed on the flange 73. A plurality of bolts 82 is provided in a protruding condition on an end surface 8c of the thick cylinder 81 at positions with respect to a plurality of mounting holes formed on a flange 93 of the second body 9.

The second body 9 comprises a small diameter tube 90, a vertical wall 91 formed outward from one end of the small diameter tube 90, a large diameter tube 92 connected to an outside end of the vertical wall 91, and a flange 93 formed outward from one end of the large diameter tube 92. A plurality of mounting holes is formed on the flange 93 at regular intervals.

The intermediate body 8 and the first body 7 are assembled by fixing the bolt 82 and a nut 83 after inserting the large diameter tube 72 of the first body 7 into the inside of the thin cylinder 80 so as to insert the bolt 82 provided in the protruded condition from the thin cylinder 80 of the intermediate body 8 into the mounting hole of the flange 73 of the first body 7. The intermediate body 8 and the second body 9 are assembled by inserting the bolt 82 provided in the protruded condition from the thick cylinder 81 of the intermediate body 8 into the mounting hole of the flange 93 of the second body 9 and fixing the bolt 82 and the nut 83.

For example, the first body 7, the intermediate body 8, and the second body 9 are formed by metals such as aluminum. Meanwhile, structures of the first body 7, the intermediate body 8, and the second body 9 are not limited to the structures shown in FIG.1.

The pressing member 10 has a cylindrical shape. The pressing member 10 comprises a contact surface 10a perpendicular to the axial direction on which the spring member 11 contacts and a cone contact surface 10b contacting the outer contact surface 5b of the male rubber unit 5. For example, the pressing member 10 is formed by metals such as aluminum.

### (Assembly process)

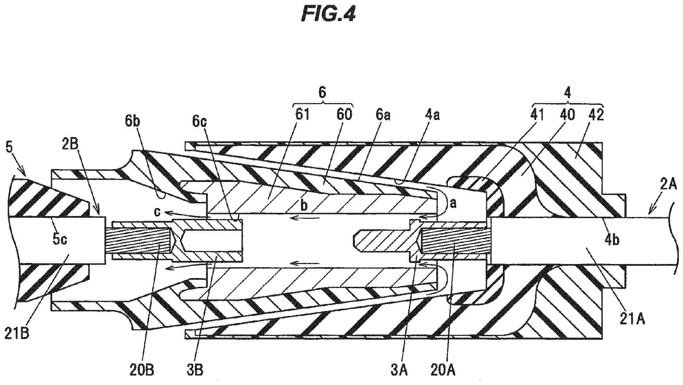

Next, an assembly process of the cable connection device 1 will be described below with reference to FIGS.1 to 4. FIG.4 is a cross sectional view showing a main part of the cable connection device to explain an assembly process shown in FIG. 1. Meanwhile, the first body 7, the intermediate body 8, the second body 9, the pressing member 10, and the spring member 11 are not shown in FIG.4.

### (1) Preparatory work

The cable conductors 20A, 20B and the insulating layers 21 A, 21 B are exposed by respectively stepwise peeling the terminations of one pair of the power cables 2A, 2B that are the connection objects. The insulating layer 21A and the insulator 40 are integrated by inserting the power cable 2A into the through hole 4b of the female rubber unit 4 (It is preferable to integrally mold the insulator 40 and the semi-conductor layers 41, 42 on an outer edge of the insulating layer 21A). The insulating layer 21B and the insulator 50 are integrated by inserting the power cable 2B into the through hole 5c of the male rubber unit 5 (It is preferable to integrally mold the insulator 50 and the semi-conductor layer 51 on an outer edge of the insulating layer 21A). Then, the conductor connection terminals 3A, 3B are connected to the cable conductors 20A, 20B. Meanwhile, either the insulating layer 21A and the insulator 40, or the insulating layer 21B and the insulator 50 may be integrated (integrally molded).

### (2) Assembling the female rubber unit 4 and the epoxy unit 6

As described above, the first body 7 and the intermediate body 8 are assembled by fixing the bolt 82 and the nut 83, and the epoxy unit 6 is arranged inside the female rubber unit 4. In this case, as shown in FIG.4, air in a gap between the inner contact surface 4a of the female rubber unit 4 and the female contact surface 6a of the epoxy unit 6 flows to a through hole 6c side indicated by the arrow a in FIG.4. Then, the air flows in the through hole 6c indicated by the arrow b in FIG.4. Then, the air escapes to the atmosphere indicated by the arrow c in FIG.4. The end surface 8a of the thick cylinder 81 of the intermediate body 8 presses the end surface 6e of the epoxy unit 6. The inner contact surface 4a contacts the female contact surface 6a tightly by this pressing force. The end surface 4d of the female rubber unit 4 is pressed on the inner surface of the vertical wall 71 of the first body 7. A rubber elastic force that the female rubber unit 4 and the epoxy unit 6 mainly have is applied to the gap between the inner contact surface 4a and the female contact surface 6a.

### (3) Assembling the male rubber unit 5

The pressing member 10 and the spring member 11 are arranged at an outer contact surface 5b side of the male rubber unit 5. Then, as described above, the intermediate body 8 and the second body 9 are assembled by fixing the bolt 82 and the nut 83. Pressing force caused by spring force of the spring member 11 is applied in a gap between the outer contact surface 5a of the male rubber unit 5 and the male contact surface 6b of the epoxy unit 6. The conductor connection terminals 3A, 3B are connected to each other by the pressing force. The void may not remain at an interface between the outer contact surface 5a and the male contact surface 6b since the contact area between the outer contact surface 5a and the male contact surface 6b is smaller than the contact area between the inner contact surface 4a and the female contact surface 6a, and the inclined angle of the male contact surface 6b with respect to the central axis is larger than the inclined angle of the female contact surface 6a with respect to the central axis.
According to the present embodiment, functions and effects described below will be provided.

Since the cable connection device 1 comprising a plurality of insulating parts 4, 5, 6 arranged around the connection 3 of the cable conductors 20A, 20B that are exposed from the terminations of one pair of the power cables 2A, 2B that are connection objects is configured to integrate the insulators 40, 50 of the female rubber unit 4 (the female part) and male rubber unit 5 (the male part) with the insulating layers 21 A, 21B of the power cables 2A, 2B, a diameter difference between an outer diameter of a cable insulating layer body and an inner diameter of a rubber unit through hole is defined (the outer diameter > the inner diameter), an interface pressure is applied at a fitting interface caused by rubber elasticity, and enough interface length is ensured. Thus, the cable connection device 1 can be more downsized since the interface length can be shorten comparing with a structure that ensures an interface breakdown strength and an assembling process can be easily since a fitting process defining the diameter difference can be omitted. Long-term interface pressure stably is kept without any possibility of decreasing the interface pressure caused by strain release with age and the interface breakdown strength increases. Moreover, anti-oscillation in driving car increases.

Remaining the void in the interface between the female contact surface 6a and the inner contact surface 4a can be controlled since the gap formed between the through hole 6c, and the connection 3 and the power cable 2B performs as the air escape flow path from the interface between the female contact surface 6a and the inner contact surface 4a when the female contact surface 6a of the epoxy unit 6 contacts the inner contact surface 4a of the female rubber unit 4.

Remaining the void in the interface between the male contact surface 6b and the outer contact surface 5a can be controlled since the epoxy unit 6 has the area of the male contact surface 6b smaller than the area of the female contact surface 6a, and the inclined angle of the male contact surface 6b with respect to the central axis larger than the inclined angle of the female contact surface 6a with respect to the central axis.

Insulation reliability can be ensured since the spring member 11 can absorb manufacturing error and aging degradation by applying the spring force of the spring member 11 in the interface between the male contact surface 6b and the outer contact surface 5a.

This cable connection device 1 is preferable to be used for a cable connection device that connects leading power cable led on a roof of car and crossover power cable connecting between cars since this cable connection device 1 can downsize in the axial direction.

The invention is not intended to be limited to the embodiments described above. The various kinds of embodiment can be implemented. Furthermore, several omissions or modifications in components can be implemented without departing from the gist of the invention.

## Claims

1. A cable connection device, comprising a plurality of insulating parts arranged to extend around a connection of cable conductors that are exposed from terminations of a pair of power cables as a connected object,
wherein the plurality of insulating parts comprise a female part comprising an inner contact surface inside the female part, a male part comprising an outer contact surface outside the male part, and an intermediate part that is arranged to be between the female part and the male part and that comprises an insulator comprising an insulating material, a female contact surface to contact the inner contact surface and a male contact surface to contact the outer contact surface, the intermediate part being arranged to define a through hole formed in an axial direction at a center of the intermediate part, and
wherein an insulator of the female part and/or the male part is integrated with an insulating layer of the power cables.

2. The cable connection device according to Claim 1, wherein the connection is arranged to comprise a female conductor connection terminal which is arranged in the through hole and on which one of the cable conductors that is exposed is mounted, and a male conductor connection terminal which is arranged in the through hole and is inserted into the female conductor connection terminal, and on which an other of the cable conductors that is exposed is mounted.

3. The cable connection device according to Claim 1 or 2, wherein the male part is integrated with the intermediate part.

4. The cable connection device according to any one of Claims 1 to 3, wherein the intermediate part comprises a conductive tube that defines the through hole and is arranged inside the insulator.

5. The cable connection device according to any one of Claims 1 to 4, wherein the female part and the male part mainly comprise a rubber, and wherein the insulator of the intermediate part is formed by an insulating material harder than the rubber.

6. The cable connection device according to any one of Claims 1 to 5, wherein the intermediate part is constructed such that an area of the male contact surface is smaller than an area of the female contact surface, and that a gap is defined inside the through hole and between the intermediate part and the connection so as to have a flow path to allow air escape through an interface between the female contact surface and the inner contact surface when the female contact surface contacts the inner contact surface of the female part.

7. A power cable, comprising an insulating layer integrated with an insulator of the male part and/or the female part of the cable connection device according to any one or more of Claims 1 to 6.
